# EUROPÄISCHE PATENTSCHRIFT

(11) **EP 1 620 260 B1**
(45) Veröffentlichungstag und Bekanntmachung des Hinweises auf die Patenterteilung: **14.05.2008**
(21) Anmeldenummer: 04722818.4
(22) Anmeldetag: 24.03.2004
(51) Int. Cl.: B32B 27/12, B32B 37/04, B29C 43/20, B29C 70/08

(54) **FASERVLIES-VERBUNDELEMENT**
NONWOVEN COMPOSITE ELEMENT
ELEMENT COMPOSITE COMPORTANT UN NON-TISSE

(30) Priorität: 05.05.2003 DE 10319967
(43) Veröffentlichungstag der Anmeldung: 01.02.2006
(73) Patentinhaber: Quadrant Plastic Composites AG, 5600 Lenzburg 1 (CH)
(72) Erfinder: MAIER, Walter, 67157 Wachenheim (DE)
(74) Vertreter: Felder, Peter
(86) Internationale Anmeldenummer: PCT/EP2004/003095
(87) Internationale Veröffentlichungsnummer: WO 2004/098879

(56) Entgegenhaltungen:
- EP-A- 0 650 828
- DE-A- 4 311 867
- DE-A- 10 052 693
- US-A1- 2002 124 936

## Beschreibung

Die Erfindung betrifft ein Faservlies-Verbundelement, enthaltend ein Mischfaservlies aus Thermoplastfasern und Verstärkungsfasern, welches ein- oder beidseitig mit einer Folie haftend verbunden ist.

Mischfaservliese im Sinne der Erfindung sind nicht konsolidierte Halbzeuge aus Thermoplastfasern und Verstärkungsfasern, die durch thermoplastisches Umformen zu faserverstärkten Fertigteilen, z.B. zu Automobilinnenteilen verarbeitet werden können.

Derartige Mischfaservliese sind z.B. in der DE-A 3614 533 beschrieben, die ein Verfahren zur Herstellung von kompakten Formkörpern aus einem faserverstärkten thermoplastischen Kunststoff betrifft. Ausgangsmaterial ist ein durch Nadeln verfestigtes Mischfaservlies aus Thermoplastfasern, vorzugsweise Polypropylenfasern oder Polyamidfasern, und anorganischen Verstärkungsfasern oder Naturfasern. Dieses Mischvlies wird, ohne vorhergehendes Konsolidieren, direkt zum Fertigteil verpresst, wobei weitere Substrate, z.B. Kunststofffolien mitverpresst werden können. Mischfaservliese sind auch in der DE-A 101 05 813 beschrieben, die ein Verfahren zur Herstellung eines thermoplastisch verformbaren, faserverstärkten Halbzeugs betrifft. Dabei werden Thermoplastfasern und Verstärkungsfasern zu einem Mischvlies vermischt, dieses wird durch Nadeln verfestigt, dann erwärmt und zu einem konsolidierten, dünnen Halbzeug verpresst, wobei auch Dekorschichten, z.B. Thermoplastfolien mitverpresst werden können.

Die DE-A-100 52 693 beschreibt ein Faservlies-Laminat aus einer ein thermoplastisches Harz umfassenden Schicht, die verbunden ist mit mindestens einer Faservlies-Verbundstoff-Schicht aus thermoplastischen Harzfasern und Cellulosefasern.

Fertigteile, die aus Polypropylen/Glasfaser-Mischvliesen hergestellt wurden, sind für manche Anwendungszwecke nicht ausreichend wasserdicht und temperaturbeständig, so dass sie sich bei starker Hitzeentwicklung verziehen können; Fertigteile, die aus Polypropylen/ Naturfaser-Mischvliesen hergestellt wurden, sind darüber hinaus schimmelanfällig und neigen oft zu Geruchsemission; dünne Fertigteile, die aus Polyamid/ Glasfaser-Mischvliesen hergestellt wurden, sind oft nicht ausreichend biegesteif. Der Erfindung lag daher die Aufgabe zugrunde, die

Mischvliese so zu modifizieren, dass daraus hergestellte Fertigteile die genannten Nachteile nicht mehr aufweisen.

Diese Aufgabe wird erfindungsgemäß dadurch gelöst, dass ein Mischfaservlies aus Thermoplastfasern und höher schmelzenden Verstärkungsfasern ein- oder beidseitig haftend verbunden wird mit einer Verbundfolie des Aufbaus ba oder bab, wobei a ein höher schmelzender und b ein niedriger schmelzender thermoplastischer Kunststoff ist, und wobei die Schicht b der Verbundfolie dem Mischfaservlies zugewandt ist.

Mischfaservliese aus Thermoplastfasern und Verstärkungsfasern sind an sich bekannt und zum Beispiel in den genannten Druckschriften ausführlich beschrieben. Als Thermoplasten kommen alle verspinnbaren thermoplastischen Kunststoffe in Frage, vorzugsweise solche, die unterhalb von 240°C schmelzen. Besonders geeignet sind Polyolefine, insbesondere Polypropylen, sowie Polyamid 6. Die Verstärkungsfasern müssen höher schmelzen als die Thermoplastfasern, im Fall von Polyamid 6 sind z.B. Glasfasern und Polyesterfasern geeignet, im Fall von Polypropylen sind neben Glasfasern auch Naturfasern, z.B. solche aus Flachs, Hanf, Jute, Sisal oder Kenaf geeignet. Die Fasern weisen im allgemeinen eine Länge von 40 bis 100 mm auf, Thermoplastfasern und Verstärkungsfasern werden im Verhältnis 80:20 bis 20:80, vorzugsweise 70:30 bis 30:70 miteinander gemischt, z.B. nach dem Krempel- oder Airlay-Verfahren, wie sie aus der Textilindustrie bekannt sind, Dabei entsteht ein als endlose Bahn vorliegendes Mischvlies, das anschließend, vorzugsweise durch Nadeln, verfestigt wird. Die Mischfaservliese sind vorzugsweise zwischen 4 und 30 mm, insbesondere zwischen mehr als 10 bis weniger als 25 mm dick.

Je nach Anwendungszweck kann das Mischfaservlies A ein- oder beidseitig mit einer Verbundfolie B haftend verbunden sein. Diese kann den Aufbau ba oder bab haben, wobei a ein höher schmelzender Thermoplast, vorzugsweise ein Polyamid, ein Polyester oder ein Polyurethan, und b ein niedriger schmelzender Thermoplast, vorzugsweise Polyethylen oder Polypropylen ist. Die Verbundfolien sind im allgemeinen zwischen 50 und 200 µm, insbesondere zwischen 60 und 150 µm dick. Geeignete Verbundfolien sind z.B. COVEXX- und COMBITHERM-Folien der Fa. Wipak.

Mischvlies und Verbundfolie(n) werden so miteinander verbunden, dass die Schicht b der Verbundfolie(n) B dem Mischfaservlies A zugewandt ist. Dies geschieht vorzugsweise dadurch, dass man kontinuierlich Mischfaservlies und Verbundfolie(n) gemeinsam einer Hitzequelle, z.B. Heißluft oder IR-Strahlung zuführt. Die Heißluft kann 300 bis 400°C heiß sein. Die Thermoplastfasern des Mischfaservlieses und der niedriger schmelzende Thermoplast der Verbundfolie werden dabei aber nur kurzzeitig, d.h. nur Bruchteile von Sekunden lang über ihren Schmelzpunkt erwärmt, so dass sie nur erweichen und nicht abtropfen; dann werden sie unmittelbar anschließend miteinander verpresst, z.B. durch Walzen. Ein derartiges Verfahren ist ausführlich in der EP-A 1 055 759 beschrieben, wo Mischfaservliese allerdings nicht mit Verbundfolien, sondern mit weiteren Thermoplastvliesen verbunden werden. Gleichzeitig kann ein- oder beidseitig eine Dekorschicht C mitverpresst werden, die ebenfalls durch den niedriger schmelzenden Thermoplasten b gebunden wird. Geeignete Dekorschichten sind z.B. Textilbahnen, Schaumfolien aus Polyolefinen oder Polyurethan, sowie Thermoplastfolien, die gegebenenfalls eingefärbt sein können.

Die erfindungsgemäßen Faservlies-Verbundelemente können wie herkömmliche Mischvliese zu Fertigteilen verarbeitet werden. Dazu werden sie auf Temperaturen oberhalb der Erweichungstemperatur der Thermoplastfasern erwärmt und bei Drücken von 2 bis 10 kp/cm² in geeigneten Formen verpresst.

Hauptanwendungsgebiete für die erfindungsgemäßen Faservlies-Verbundelemente sind Automobilinnenteile, z.B. Türinnenverkleidungen, Hutablagen, Ladeböden im Kofferraum und Dachhimmel. Letztere bestehen aus zwei Schichten des Verbundelements, das beidseitig eine Verbundfolie des Aufbaus bab aufweist, wobei die beiden Schichten nur an einer Vielzahl von Teilbereichen miteinander verschweißt sind, und wobei sich zwischen den Schichten nicht verschweißte, Luftpolster enthaltende Bereiche befinden, an denen die obere Schicht aufgewölbt ist. Die Herstellung dieser Dachhimmel erfolgt nach dem in der DE-A 101 60 442 beschriebenen Verfahren, wobei aber statt der geschlossenzelligen Schaumfolie die luftdichte Verbundfolie das Entweichen der Luft verhindert. Im Automobilaußenbereich können aus den Verbundelementen Motorverkapselungen und Unterbodenschutzplatten hergestellt werden. Weitere Anwendungsgebiete sind Koffer und andere Behältern, z.B. für Computer. Immer dann, wenn durch starke Erwärmung die Gefahr besteht, dass das Fertigteil erweicht und sich dann verbiegt, empfiehlt es sich, Mischfaservliese auf Basis von Polyamid 6 einzusetzen.

### Beispiel

Ein 12 mm dickes, genadeltes Mischfaservlies aus 60 Gew.% Polypropylenfasern und 40 Gew% einer Naturfasermischung aus Flachs, Hanf und Kenaf (NAFCOFORM der Quadrant Natural Fiber Composites) wurde beidseitig mit einer 90 µm dicken Verbundfolie des Aufbaus bab aus Polyethylen und Polyamid 6,6 (COVEXX der Fa. Wipak) kaschiert, wobei das kontinuierliche Thermobonding-Verfahren nach EP-A 1 055 759 angewandt wurde. Aus dem entstandenen Faservlies-Verbundelement wurden 80 x 120 große Zuschnitte herausgeschnitten. Diese wurden in eine Form eingelegt und bei einem Druck von 3 kp/cm² zu einer Türinnenverkleidung verpresst.

## Patentansprüche

1. Faservlies- Verbundelement, enthaltend
A. ein Mischfaservlies aus Thermoplastfasern und höher schmelzenden Verstärkungsfasern, welches ein- oder beidseitig haftend verbunden ist mit
B. einer oder zwei Folien aus einem thermoplastischen Kunststoff, **dadurch gekennzeichnet, dass** die Folie(n) B eine Verbundfolie des Aufbaus ba oder bab ist, wobei a ein höher schmelzender thermoplastischer Kunststoff ist, ausgewählt aus einem Polyamid, einem Polyester und einem Polyurethan, und b ein niedriger schmelzender thermoplastischer Kunststoff ist, ausgewählt aus Polyethylen oder Polypropylen, wobei die Schicht b der Verbundfolie(n) dem Mischfaservlies zugewandt ist, und dass die Dicke der Verbundfolie(n) zwischen 50 und 200 µm liegt.

2. Verbundelement nach Anspruch 1, **dadurch gekennzeichnet, dass** die Thermoplastfasern des Mischfaservlieses A Polypropylenfasern und die Verstärkungsfasern Glasfasern oder Naturfasern sind.

3. Verbundelement nach Anspruch 1, **dadurch gekennzeichnet, dass** die Thermoplastfasern des Mischfaservliese A Polyamid 6- Fasern und die Verstärkungsfasern Glasfasern oder Polyesterfasern sind.

4. Verbundelement nach Anspruch 1, **dadurch gekennzeichnet, dass** das Gewichts-Verhältnis Thermoplastfasern zu Verstärkungsfasern 80 : 20 bis 20 : 80 beträgt.

5. Verbundelement nach Anspruch 1, **dadurch gekennzeichnet, dass** das Misch-Faservlies genadelt ist.

6. Verbundelement nach Anspruch 1, **dadurch gekennzeichnet, dass** die Dicke des Mischfaservlieses A zwischen 4 und 30 mm liegt.

7. Verfahren zur Herstellung des Faservlies- Verbundelements nach Anspruch 1, **dadurch gekennzeichnet, dass** das Mischfaservlies A und die Verbundfolie(n) B gemeinsam einer Hitzequelle kontinuierlich zugeführt und unmittelbar anschließend an die Erhitzung miteinander verpresst werden.

8. Verfahren nach Anspruch 7, **dadurch gekennzeichnet, dass** die Material-Temperatur beim Erhitzen oberhalb der Erweichungstemperatur der Thermoplastfasern des Mischfaservlieses A und des niedriger schmelzenden thermoplastischen Kunststoffs der Verbundfolie(n) B ist.

9. Verfahren nach Anspruch 7, **dadurch gekennzeichnet, dass** eine Dekorschicht C mitverpresst wird.

10. Verwendung des Verbundelements nach Anspruch 1 zur Herstellung von Automobilteilen.

11. Automobilinnenteile, wie Dachhimmel, Hutablagen, Türinnenverkleidungen und Kofferraumverkleidungen, hergestellt aus Verbundelementen nach Anspruch 1, **dadurch gekennzeichnet, dass** die Verbundfolien den Aufbau bab haben.

12. Unterbodenschutz und Motorverldeidungen für Automobile, hergestellt aus Verbundelementen nach Anspruch 1, **dadurch gekennzeichnet, dass** die Verbundfolien den Aufbau ba haben.

## Claims

1. A nonwoven composite element, containing
A. a blended fiber nonwoven comprising thermoplastic fibers and higher melting reinforcing fibers, which is adherently joined at one or both sides thereof to
B. one or two composite foils of a thermoplastic material,
**characterized in that** the foil(s) B is a composite foil with the structure ba or bab, wherein a is a higher melting thermoplastic material, selected from a polyamide, a polyester and a polyurethane, and wherein b is a lower melting thermoplastic material, selected from polyethylene or polypropylene, and wherein layer b of the composite foil(s) faces the blended fiber nonwoven, and wherein the thickness of the composite foil(s) is between 50 and 200 µm.

2. Composite element according to claim 1, **characterized in that** the thermoplastic fibers of the blended fiber nonwoven A are polypropylene fibers and that the reinforcing fibers are glass fibers or natural fibers.

3. Composite element according to claim 1, **characterized in that** the thermoplastic fibers of the blended fiber nonwoven A are polyamide 6 fibers and that the reinforcing fibers are glass fibers or polyester fibers.

4. Composite element according to claim 1, **characterized in that** the weight ratio of thermoplastic fibers to reinforcing fibers is 80 : 20 to 20 : 80.

5. Composite element according to claim 1, **characterized in that** the blended fiber nonwoven is needled.

6. Composite element according to claim 1, **characterized in that** the thickness of the blended fiber nonwoven A is between 4 and 30 mm.

7. Method for producing the nonwoven composite element according to claim 1, **characterized in that** the blended fiber nonwoven A together with the composite foil(s) B are continuously supplied to a heating source and are pressed together immediately after heating.

8. Method according to claim 9, **characterized in that** during heating the temperature of the material is above the softening temperature of the thermoplastic fibers of the blended fiber nonwoven A and of the lower melting thermoplastic of the composite foil(s) B.

9. Method according to claim 9, **characterized by** co-pressing a decor layer C.

10. Use of the composite element according to claim 1 for producing automotive parts.

11. Automotive interior parts such as headliners, hat racks, interior door linings and luggage trunk linings, produced from composite elements according to claim 1, **characterized in that** the composite foils have the structure bab.

12. Underbody skidplates and automotive engine encapsulations, produced from composite elements according to claim 1, **characterized in that** the composite foils have the structure ba.

## Revendications

1. Elément composite en non-tissé comportant
A. un non-tissé de fibres mélangées en fibres thermoplastiques et en fibres de renforcement à température de fusion élevée, reliées de façon à s'accrocher d'un côté ou des deux côtés,
B. un ou deux films en une matière thermoplastique,
**caractérisé en ce que**
le ou les films (B) ont une structure (ba) ou (bab),
dans laquelle (a) représente une matière thermoplastique à température de fusion élevée choisie parmi un polyamide, un polyester et un polyuréthane, et
(b) est une matière thermoplastique à point de fusion plus bas, choisie parmi les polyéthylènes et les polypropylènes, la couche (b) du ou des films composites étant tournée vers le non-tissé de fibres mélangées et l'épaisseur du ou des films composites est comprise entre 50 et 200 µm.

2. Elément composite selon la revendication 1,
**caractérisé en ce que**
les fibres thermoplastiques du non-tissé de fibres mélangées (A) sont des fibres de polypropylène ou les fibres de renforcement sont des fibres de verre ou des fibres naturelles.

3. Elément composite selon la revendication 1,
**caractérisé en ce que**
les fibres thermoplastiques du non-tissé de fibres mélangées (A) sont des polyamides à 6 fibres et les fibres de renforcement sont des fibres de verre ou des fibres de polyester.

4. Elément composite selon la revendication 1,
**caractérisé en ce que**
le rapport pondéral des fibres thermoplastiques et des fibres de renforcement est de 80 : 20 jusqu'à 20 : 80.

5. Elément composite selon la revendication 1,
**caractérisé en ce que**
les nappes de fibres mélangées sont aiguilletées.

6. Elément composite selon la revendication 1,
**caractérisé en ce que**
l'épaisseur du non-tissé de fibres mélangées (A) est comprise entre 4 et 30 mm.

7. Procédé de fabrication d'un élément composite en non-tissé selon la revendication 1,
**caractérisé en ce que**
le non-tissé de fibres mélangées (A) et le ou les films composites (B) sont fournis en continu à une source de chaleur et sont comprimés directement après le chauffage.

8. Procédé selon la revendication 7,
**caractérisé en ce qu'**
au chauffage, la température de la matière est supérieure à la température de ramollissement des fibres de matière thermoplastique du non-tissé de fibres mélangées (A) et de la matière thermoplastique de point de fusion plus faible du ou des films composites (B).

9. Procédé selon la revendication 7,
**caractérisé par**
une couche de décoration (C) comprimée en même temps.

10. Application de l'élément composite selon la revendication 1 pour la fabrication de pièces pour l'automobile.

11. Pièces pour l'automobile telles que toit, lunette arrière, habillage intérieur de portière et habillage de coffre, fabriquées à partir d'éléments composites selon la revendication 1,
**caractérisées en ce que**
les films composites ont la structure (bab).

12. Protections extérieures de planchers et habillages de moteurs pour des automobiles, réalisées en des éléments composites selon la revendication 1,
**caractérisées en ce que**
les films composites ont la structure (ba).
